Europäisches Patentamt

European Patent Office

Office européen des brevets

(11) Veröffentlichungsnummer: 0 228 698

A2

(12) EUROPÄISCHE PATENTANMELDUNG

(21) Anmeldenummer: 86117973.7

(22) Anmeldetag: 23.12.86

(51) Int. Cl.⁴: C08B 37/08

(30) Priorität: 06.01.86 US 816548

(43) Veröffentlichungstag der Anmeldung:
15.07.87 Patentblatt 87/29

(84) Benannte Vertragsstaaten:
AT BE CH DE ES FR GB IT LI NL SE

(71) Anmelder: MOBAY CORPORATION
Mobay Road
Pittsburgh Pennsylvania 15205-9741(US)

(72) Erfinder: Brown, Karen K.
10000 N.E. Harrison Drive
Kansas City, Mo 64155(US)
Erfinder: Greene, Nathan D.
15463 Overbrook Lane
Leawood Kansas 66224(US)
Erfinder: Trump, Sandy L.
8963 Waverly
DeSoto Kansas 66018(US)
Erfinder: Bryant, Sharon A.
6727 Woodland
Shawnee Kansas 66218(US)

(74) Vertreter: Schumacher, Günter, Dr. et al
c/o Bayer AG Konzernverwaltung RP
Patentabteilung
D-5090 Leverkusen 1 Bayerwerk(DE)

(54) Niedrigviskose hochmolekulare filtersterilisierbare Hyaluronsäure.

(57) Die vorliegende Offenbarung betrifft Verfahren zur Einstellung des mittleren Molekulargewichts, der Molekulargewichts-Verteilung und der Viskosität in Lösungen Hyaluronsäure und ihrer Salze (HA), insbesondere ihres Natrium-und Kalium-Salzes. Das mittlere Molekulargewicht kann dadurch erhöht werden und die Molekular-gewichtsVerteilung kann dadurch verengt werden, daß dieses Material in ein Bad eines Nichtlösungsmittels hinein ausgefällt wird, das eine sich kontinuierlich bewegende Vorrichtung enthält, an der es beim Ausfallen haften kann. Die Lösungs-Viskosität dieser oder einer beliebigen hochmolekularen, hochviskosen HA kann ohne nennenswerte Beeinflussung ihres Molekulargewichts entweder durch eine Wärmebehandlung bei mäßiger Temperatur oder durch Hindurchschicken einer wäßrigen Lösung von 1 Gew.-% oder stärker durch ein feinporiges (1 μm oder weniger) Filter erniedrigt werden. Die Offenbarung betrifft weiterhin auch die auf diese Weise gewonnene HA mit hohem Molekulargewicht und niedriger Viskosität in Lösung.

EP 0 228 698 A2

## Niedrigviskose hochmolekulare filtersterilisierbare Hyaluronsäure

Die Vorteile des Einsatzes der Hyaluronsäure und ihrer Salze (HA) als Ersatzstoff der Augen-oder Gelenkflüssigkeit sind wohlbekannt; vgl. beispielsweise die US-PSen 141 973, 4 517 795 und 2 975 104. Die meisten Verwendungszwecke der Hyaluronsäure oder ihrer Salze erfordern ein Polymer mit hohem Molekulargewicht. HA-Erzeugnisse wie Hylartil (Pharmacia nach der US-PS 4 141 973) haben ein hohes Molekulargewicht, jedoch sind sie auch hochviskos. Ein solches hochviskoses Produkt kann für manche Zwecke ideal sein (d.h. die Verminderung von Adhäsions-Bildungen nach chirurgischen Eingriffen); HA zur Injektion sollte jedoch vorzugsweise niedrige Viskosität haben und filtrierbar, insbesondere filtersterilisierbar, sein. Einige neue Extraktionsverfahren stellen niedrigviskose HA her, jedoch hat diese auch ein niedriges Molekulargewicht (Sterivet-Produkt, US-PS 4 517 195 und Shimada und Matsumura, 1975). Offensichtlich hat dieses Produkt einige Vorteile in bezug auf die Injizierbarkeit, jedoch erfordert sein niedriges Molekulargewicht den Einsatz höherer Dosierungen (5,0 ml Sterivet gegenüber 2,0 ml des Pharmacia-Produkts). Außerdem ist die Sterivet-HA nicht filtersterilisierbar, sondern muß durch Hitze sterilisiert werden.

Niemand hat bisher Arbeitsweisen zur Gewinnung hochmolekularer HA aus niedrigmolekularer HA beschrieben. Jedoch ist ein Verfahren zur Verminderung der Viskosität durch Einstellen des pH in der Literatur beschrieben (Mitra et al., 1983; Mitra, Raghunathan et al., 1983 und Sheehan et al., 1983). Diese Gruppen diskutieren das Molekulargewicht nicht, setzen jedoch diese Erscheinung des reversiblen pH-Wertes in Beziehung zu einer Konformationsänderung in dem HA-Molekül. Sie stellten theoretische Überlegungen dahingehend an, daß die erniedrigte Viskosität wahrscheinlich auf eine erhöhte Flexibilität des Polymers zurückzuführen ist, die die Folge eines Übergangs Ordnung-zu-Unordnung sein kann. Dies deutet eine Instabilität des Polymers und ein schließlich erniedrigtes Molekulargewicht an. Swann (1969) stellte zur Diskussion, daß die Einbuße an Viskosität durch eine Ionisation der Hydroxyl-Gruppen und ein Aufbrechen der Zwischenrest-Wasserstoff-Bindungen innerhalb der statistischen Wicklung der $\alpha$-Helix-Struktur der HA verursacht sein könne. Interessanterweise läßt sich diese Erscheinung der von einem hohen pH herrührenden Viskositätsverminderung vollständig durch Absenken des pH unter 3,0 umkehren. Tatsächlich wird bei einem pH von ungefähr 2,5 ein viskoelastischer Kitt erzeugt (Gibbs et al., 1968). Es ist ebenfalls von Interesse, daß die HA mit niedriger Viskosität bei hohem pH sehr schwierig durch Filtrieren zu sterilisieren ist. Vor dem Filter baut sich eine Gel-Schicht auf, die ein Filtration in großem Volumen praktisch unmöglich macht.

Wir haben nunmehr relativ einfache und neue Arbeitstechniken zur Gewinnung hochmolekularer HA - (zweckmäßigerweise in Form von Natriumhyaluronat,NaH) mit hoher Viskosität und zur Verringerung der HA-Viskosität ohne Verminderung des gewünschten hohen mittleren Molekulargewichts gefunden. Das dabei gewonnene HA-Produkt ist durch ein hohes mittleres Molekulargewicht (vorzugsweise größer als etwa $1,2 \times 10^6$) mit einem schmalen Molekulargewichtsbereich, eine niedrige Viskosität (vorzugsweise kleiner als etwa 500 cSt in einer Lösung von 1 Gew.-% bei 37 °C), ultrahohe Reinheit (<1,25 mg/ml, vorzugsweise <0,1 mg/ml, Protein oder Aminosäuren, gemessen mittels HPLC oder UV-Spektrometrie, und <45 mg/ml, vorzugsweise <5,0 µg/ml, Nucleinsäuren, gemessen mittels der gleichen Techniken) gekennzeichnet.

Eine niedrigviskose HA, die noch ein hohes Molekulargewicht mit einem schmalen Molekulargewichtsbereich aufweist, kann entweder durch eine gezielte kontrollierte Wärmebehandlung der HA-Lösung oder durch Filtration einer Lösung mit minimaler Konzentration unter hohem Druck oder Vakuum durch engporige Membranen erhalten werden. Sehr überraschend sind diese Vorgänge der Viskositätserniedrigung nicht unmittelbar reversibel, wie dies bei dem oben beschriebenen Vorgang der pH-Änderung der Fall ist, und sie erniedrigen auch nicht das Molekulargewicht im Zusammenhang mit der Senkung der Viskosität. Außerdem ermöglichen die hier beschriebenen Techniken der Viskositätserniedrigung, daß das HA-Endprodukt filtersterilisiert wird,während der Einsatz des pH zur Senkung der Viskosität nicht ein filtrierbares Produkt liefert.

Der Vorgang der wärmeabhängigen Viskositätserniedrigung ist der Zeit und der Temperatur direkt proportional. Je länger die Wärmebehandlung bei einer konstanten Temperatur (vorzugsweise im Bereich von 50 °C bis 70 °C) durchgeführt wird, desto niedriger wird die Viskosität. Eine Steigerung der Temperatur auf einen Wert um 121 °C erniedrigt die Viskosität in einer kürzeren Zeitspanne. Die Einwirkung einer zu hohen Temperatur während einer zu langen Zeit (>60 min bei >121 °C) führt zu Karamelisierung und einer gewissen Hydrolyse, die eine unerwünschte Verminderung des Molekulargewichts zur Folge hat. Bei der Anwendung der Filtrationstechnik sollte die engporige Membran eine mittlere Porengröße von weniger als etwa 1 µm, vorzugsweise von weniger als 0,5 µm, haben.

Ein sehr wichtiger Aspekt unseres HA-Produkts ist, daß es ein relativ hohes Molekulargewicht (z.B. wenigstens etwa 1 000 000, vozugsweise wenigstens 1 800 000) und eine künstlich erzeugte Viskosität - (z.B. weniger als etwa 500 cSt, vorzugsweise weniger als etwa 150 cSt,, gemessen als 1-proz. wäßrige Lösung des Natrium-Salzes) besitzt. Die erfindungsgemäßen Verfahren zur Senkung der Viskosität ohne nennenswerte Verringerung des hohen mittleren Molekulargewichts werden in den folgenden Beispielen und Tabellen erläutert (in denen das Molekulargewicht mittels FPLC bestimmt ist und die Viskosität diejenige einer wäßrigen Lösung mit 1 Gew.-% NaH bei 37 °C ist, sofern nichts Anderes angegeben ist).

Ein Verfahren, aus dem ein erhöhtes Molekulargewicht und eine erhöhte Viskosität von HA resultieren, arbeitet mit dem Einsatz einer in ein Bad eines Nichtlösungsmittels für HA oder NaH tauchenden, sich kontinuierlich bewegenden Vorrichtung, an der ausfallende HA oder ausfallendes NaH haftet. Ein Wickelapparat, hierin als "Wickler" bezeichnet verleiht dem flüssigen Medium, in das hinein die HA gefällt wird, eine Rotationsscherung und liefert ein sich bewegendes Substrat, an dem die ausfallende HA sich festmachen kann. Der Wickler ist aus Stangen oder Stäben aus nichtrostendem Stahl, die in senkrechter Orientierung angeordnet sind, gefertigt und ist auf einer rotierenden Welle befestigt. Eine senkrechte Welle wird bevorzugt. Die Welle wird mittels eines Motors gedreht, dessen Geschwindigkeit geregelt werden kann. Die genaue Größe und Bauart des Wicklers kann je nach der Größe des Behälters und der Menge der zu sammelnden HA variiert werden. Eine aus einem rotierenden Zylinder aus Maschendraht bestehende käfigartige Konstruktion wird bevorzugt. Unter Benutzung dieses Wicklers läuft das Verfahren zur Herstellung von hochmolekularer und hockkviskoser HA so ab, wie es unten beschrieben wird.

Die Lösung von Natriumhyaluronat wird in Form eines feinen Stromes oder mehrerer feiner Ströme in einen Behälter mit einem Nichtlösungsmittel, vorzugsweise Ethanol, eingeführt. Bei Berührung mit dem Nichtlösungsmittel wird das Produkt sofort mit dem Nichtlösungsmittel gesättigt und dadurch in Form langer Schnüre ausgefällt. Diese Schnüre werden durch die Rotation des Wickelapparats in Bewegung gehalten, der seinerseits das Nichtlösungsmittel in dem Behälter in eine Drehbewegung versetzt. Bei Berührung der ausgefällten Schnur des unlöslichen Natriumhyaluronats mit den "Fingern" oder senkrechten Stäben des Wicklers heftet sich der Niederschlag an diese an. Da das Produkt dazu neigt, an sich selbst und an den meisten Oberflächen zu kleben, sammelt es sich dann auf dem Wickler. Man nimmt an, daß diese Haftung an sich selbst längere Polymere erzeugt, die zahlreiche Wasserstoff-Bindungen zwischen den Resten bilden, was wiederum ein höheres Molekulargewicht und eine höhere Viskosität zur Folge hat. Durch Verwendung eines Behälters, der vom Boden her entleert werden kann, ist es danach möglich, das nunmehr verdünnte Nichtlösungsmittel dem Behälter zu entnehmen und wunschgemäß eine Lösung mit Wasser oder Puffer zuzuführen. Das gefällte Produkt kann auf diese Weise in dem Behälter ohne weitere Handhabung wieder löslich gemacht werden. Es ist hier anzumerken, daß die Lehre der US-PS 4 517 795 von einer Arbeitsweise wie dieser hinwegführt. Die US-PS 4 517 795 betont wiederholt, daß die Ethanol-HA-Lösung nicht gerührt oder vermischt werden soll.

Methode der Wärmebehandlung:

Die Tabellen 1 bis 3 demonstrieren die Auswirkung von Wärme auf die Viskosität. Sämtliche Viskositäten wurden mit Hilfe eines Cannon-Manning-Semimikroviskosimeters entsprechend den in ASTM D445 und D2515 beschriebenen Arbeitsvorschriften bei 37 °C gemessen und sind in Centistokes (cSt) angegeben. Das Molekulargewicht wurde durch Gelfiltration (Heftmann, Chromatrography) mit Hilfe eines Fast Protein Liquid Chromatograph (FPLC) und einer TSK HW 65F-oder TSK HW 75G -Säule nach folgender Arbeitsweise bestimmt:

Bestimmung des Gewichtsmittels des Molekulargewichts ($M_w$) für Natriumhyaluronat

1.0 Zweck

Eine Methode der Flüssigkeitschromatographie verfügbar zu machen, um ein mittleres Gewicht für das Natriumhyaluronat-Molekül in Relation zu bekannten Standard-Molekulargewicht-Mittelwerten zu bestimmen.

## 2.0 Bereich

Anwendbar auf alle Rohstoffe im Verfahren und/oder Fertigprodukt-Proben von Natriumhyaluronat.

## 3.0 Prinzipien

Die Gelfiltration (Ausschlußchromatographie nach Größe) vermag Molekulargewichts-Information durch Vergleich der Analyt-Peak-Elutions-Volumina mit einer Standard-Kurve zu bestimmen, die aufgrund der Analyse von Substanzen mit ähnlicher Molekül-Gestalt und Dichte, die ebenfalls ein bekanntes mittleres Molekulargewicht haben, aufgestellt wurde. Die Standard-Kurve sollte, um leistungsfähig zu sein, über einen Bereich von Molekülgrößen-Standards aufgestellt sein, in den der interessierende Analyt fällt.

## 4.0 Arbeitsweise

### 4.1 Instrument-Parameter

Säule -Fractogel TSK HW 65F (EM Sciences) Fraktionierungsbereich = Molekulargewicht $M_w$ 50 000 bis 5 000 000 (globuläre Species).
Säulengröße -50 cm ± 2 cm x 2,01 cm Innendurchmesser Gel-Bett.
Mobile Phase -PBS-P (Formel angefügt) filtriert über 0,22 μm PTFE (150 ml/Injektion).
Strömungsgeschwindigkeit - 2 ml/min.
Papiergeschwindigkeit -0,20 cm/min.
Detektorempfindlichkeit -4 x 0,05 (ISCO VY).
Wellenlänge -205 nm bis 208 nm.
Steuergerät -LCC 500 (Pharmacia), programmiert zum Betrieb der Säule entsprechend den angebenen Instrument-Parametern.
Injektionsvolumen - 1000 μl.
Temperatur -Die Säule muß auf konstanter Temperatur gehalten werden, wobei die Raumtemperatur am günstigsten ist. Die Konstanz der Basislinie wird nachteilig beeinflußt, wenn die Temperatur während eines Durchlaufs schwenkt, und nur Durchläufe bei der gleichen Temperatur sind ohne weiteres vergleichbar.
Man läßt die Säule mit der mobilen Phase sich stabilisieren, bis eine konstante Basislinie erreicht ist.

### 4.2 Aufstellung einer Standard-Kurve

#### 4.2.a Reagenzien
Mobile Phase:
Thyreoglobulin (Sigma #T-1001) $M_w$ 669 000 oder äquivalent und Blue Dextran.
#### 4.2.b Standards
Man bereitet eine Thyreoglobulin-Stammlösung durch Einwiegen von 0,006 g in einen 25 ml-Meßkolben. Man verdünnt mit der mobilen Phase bis zur Marke. Man läßt die Substanz sich vollständig auflösen und - schüttelt zur Mischung von Zeit zu Zeit. Man pipettiert 10 ml der Stammlösung in einen 20 ml-Meßkolben. Man verdünnt mit der mobilen Phase bis zur Marke. Die erhaltene Lösung enthält 125 μg/ml Thyreoglobulin.

4.2.c Man bereitet eine Stammlösung von Blue Dextran durch Einwiegen von 0,08 g in einen 20 ml-Meßkolben. Man verdünnt mit der mobilen Phase bis zur Marke. Man läßt die Substanz sich vollständig auflösen und schüttelt zur Mischung von Zeit zu Zeit. Man pipettiert 5 ml der Stammlösung in einen 20 ml-Meßkolben. Man verdünnt mit der mobilen Phase bis zur Marke. Die erhaltene Lösung enthält 1000 μg/ml Blue Dextran.

Die beiden Stammlösungen sind gekühlt 30 Tage beständig. Man setzt die Arbeitslösungen aus den Stammlösungen täglich frisch an. Man filtriert beide Arbeitslösungen vor der Chromatographie durch ein 0,22 μm-Filter.

4.2.d Man pipettiert 3,5 ml jedes $M_w$-Standards in entsprechend bezeichnete Duplikat-Teströhrchen. Man stellt das Steuergerät auf die Zahl der Injektionen ein.

4.2.e Man bestimmt das mittlere Durchschnitts-Volumen der Elution ($V_e$) für beide Standards.

4

4.2.f Man berechnet $K_{av}$ für jeden Standard nach

$K_{av}$ =

$$\frac{V_e - V_0}{V_t - V_0}$$

, worin

$V_e$ = Elutionsvolumen,

$V_0$ = Leervolumen (totaler Ausschluß von den Gel-Poren),

$V_0 = (V_t \bullet 0{,}33)$ ,

$V_t$ = Gesamt-Säulenvolumen des gepackten Gels,

$K_{av}$ = Bruchteil des stationären Gel-Volumens, der zu jeder Zeit für die Diffusion der gelösten Species zur Verfügung steht,

$V_t = \pi r^2 h$ ,

r = Raduis der inneren Dimension der Säule,

h = Höhe der Packung in der Säule.

4.2.g Man fertigt eine graphische Darstellung an, auf deren X-Achse log $M_w$ der Standards und auf deren Y-Achse $K_{av}$ aufgetragen werden. Man trägt die $K_{av}$-Werte der Standards in das Diagramm ein und zeichnet die beide Standard-Punkte schneidende Ausgleichskurve.

Oder:

Man gibt die obigen Daten in einen für "lineare Regression" programmierten Rechner oder Computer ein.


4.3 Bestimmung des mittleren Molekulargewichts der Probe

4.3.a Wenn der Analyt 0,80 bis 1,2 % HA enthält, wiegt man eine Probe von 0,48 bis 0,52 g in einen 20 ml-Meßkolben ein. Man verdünnt mit der mobilen Phase bis zur Marke (Verdünnung 1:40).

4.3.b Wenn der Analyt weniger als 0,80 % HA enthält, wiegt man eine Probe von 0,78 bis 0,82 g in einen 20 ml-Meßkolben ein. Man verdünnt mit der mobilen Phase bis zur Marke (Verdünnung 1:25).

4.3.c Wenn der Analyt 1,2 bis 2,0 % HA enthält, wiegt man eine Probe von 0,31 bis 0,35 g in einen 20 ml-Meßkolben ein. Man verdünnt mit der mobilen Phase bis zur Marke (Verdünnung 1:60). 4.3.d Man folgt den oben zur instrumentellen Einrichtung angegebenen Arbeitsweisen. Man injiziert Proben von 1000 $\mu l$ der durch 0,2 $\mu m$ filtrierten Proben unter den gleichen instrumentellen Bedingungen wie bei der Standardisierung.

4.3.e Man bestimmt $V_e$ für jede Injektion. Man berechnet $K_{av}$ wie vorstehend.

4.3.f Man trägt die $K_{av}$-Werte für die Probe auf oder gibt sie ein. Man bestimmt den entsprechenden Wert log $M_w$ auf der X-Achse. Man bestimmt den Anti-log zur zahlenmäßigen Bestimmung des mittleren Molekulargewichts.


5.0 Validität der Ergebnisse

5.1 Standards

Die Standard-Werte sind gültig, wenn $V_e$ für Thyreoglobulin 1,25 bis 1,39 ml/cm Gel beträgt. $V_e$ für den ersten Peak von Blue Dextran beträgt 0,82 bis 0,90 ml/cm Gel (der zweite Peak ist derjenige einer Fraktion mit einem kleineren $M_w$ als 2 000 000).

5.2 Proben

Die Ergebnisse sind gültig, wenn die Probe-$V_e$-Werte in die Standard-Kurve fallen.

5.3 Ergebnisse sind gültig, wenn die $K_{av}$-Werte für die Standards oder Proben kleiner als 1,0 jedoch größer als 0,0 sind.

5.4 Ergebnisse sind gültig, wenn die Analyt-Konzentration im Bereich von 0,20 mg/ml bis 0,30 mg/ml liegt (oder eine Verschiebung stattfinden könnte).

6.0 Anmerkung =

Die Standard-Kurve sollte alle 30 Tage mit frischen Reagenzien erneuert werden, sofern nicht Änderungen in den Systemparametern eine häufigere Auswertung erfordern, z.B. eine Verdichtung des Gels oder eine neue Säule.

Formel für die mobile Phase PBS-P

Man gibt

8,5 g NaCl,

0,223 g $Na_2HPO_4$ (wasserfrei) können erforderlichenfalls durch 0,28 g $Na_2HPO_4$-Di-hydrat ersetzt werden, und

0,04 g $NaH_2PO_4 \bullet H_2O$

in einen 1000 ml-Meßkolben und verdünnt mit destilliertem entionisiertem Wasser bis zur Marke. Man mischt gut. Man filtriert vor Gebrauch durch ein 0,22 $\mu$m-Filter. Die Mischung ist bei Aufbewahrung in steriler Umgebung 15 Tage bei Raumtemperatur beständig.

Für Tabelle 1 wurden die Ansätze 7 bis 20 Tage in einem offenen Gefäß aus eine konstante Temperatur von etwa 60 °C erhitzt. Bei Anwendung dieser bevorzugten Behandlung fällt die Viskosität signifikant ab (z.B. von 4475 auf 134 für Ansatz 1), während das Molekulargewicht gleich bleibt. Fig. 2 zeigt die FPLC-Peaks für aliquote Anteile des Ansatzes 2, die während der Wärmebehandlung entnommen wurden. Sämtliche Peaks sind identisch, was anzeigt, daß durch Wärme nicht einmal geringe Schwankungen oder Verschiebungen des Molekulargewichts bewirkt werden.

Die in Tabelle 2 aufgeführten Daten wurden durch Erhitzen dreier aliquoter Anteile der gleichen 1-proz. Lösung von Natriumhyaluronat (NaH) während einer konstanten Zeitspanne, jedoch unter Anwendung von Temperaturen zwischen 30 °C und 50 °C, erhalten. Es ist evident, daß die Viskosität einer solchen Polymer-Lösung sogar durch Langzeit-Aufbewahrung bei 30 °C erniedrigt werden kann (von 318 hinunter auf 298). Die Erhöhung der Temperatur auf 50 °C bewirkt im gleichen Zeitraum eine größere Viskositätsabnahme (d.h. von 318 hinunter auf 175). Wiederum wurde das Molekulargewicht nicht beeinflußt.

Der Effekt einer hohen Temperatur auf die Viskosität von NaH ist in Tabelle 3 dargestellt. Eine Lösung von 1,1 % NaH wurde 30 min autoklaviert {1,034 bar (15 psi) Druck bei 121 °C}. Sie wurde dann re-autoklaviert. Aus Tabelle 3 geht hervor, daß durch diese Kurzzeit-Hochtemperatur-Behandlungen die Viskosität beträchtlich gesenkt wurde, ohne daß das Molekulargewicht beeinflußt wurde.

Es wurde gefunden, daß die Wärmebehandlung über einen breiten Bereich von Bedingungen hinweg wirksam ist, der etwas von der Viskosität des Ausgangsmaterials abhängt. Ein besonders bevorzugter Bereich liegt zwischen etwa 7 und 20 Tagen bei Temperaturen zwischen etwa 55 °C und 80 °C in einem offenen Gefäß. Es scheint, als sei die Viskositätserniedrigung gehemmt, wenn die Wärmebehandlung in einem geschlossenen Gefäß durchgeführt wird.

Methode der Filtration:

Der Einsatz von Filtrationstechniken zur Verminderung der Viskosität hängt von der Porengröße, der Strömungsgeschwindigkeit und der Zahl der tatsächlichen Filtrationen ab. Die Technik sollte auf HA-Lösungen von etwa 1 Gew.-% oder mehr angewandt werden, da in verdünnteren Lösungen die Moleküle nicht ausreichend komplexiert sind, um beim Durchgang durch die Filter-Poren eine konfigurationsmäßige Modifizierung zu erleiden. Bei solchen Konzentrationen ist die Viskosität hoch genug, um spezielle Schritte zur Durchführung der Filtration, wie die Anwendung höherer Drucke oder Vakua und größerer Verhältnisse der Filterfläche zu dem Lösungsvolumen, zu erfordern. Je kleiner die Porengröße ist (etwa <0,5 $\mu$m) und je höher der Druck oder das Vakuum ist, desto niedriger wird die Viskosität. Außerdem wird die Viskosität in direkter Beziehung zur Zahl der Filtrationen vermindert. Tabelle 4 zeigt diesen Effekt der Filtration. Cellulosenitrat-Filter wurden mit einem Vakuum von 12,5 bis 26 cm Hg (5 bis 10 inch Hg) verwendet. Wiederum wird die Viskosität vermindert, ohne daß das Molekulargewicht beeinflußt wird. Man nimmt an, daß zu diesem Zweck jedes Filter-Matrix-Material annehmbar ist.

Es ist anzumerken, daß HA oder NaH normalerweise nur sehr schwer mittels eines 0,22 $\mu$m-Membranfilters filtersterilisierbar ist. Selbst HA oder NaH, die bzw. das, wie im Vorstehenden beschrieben wurde, zur Erniedrigung der Viskosität auf pH 11 gebracht wurde, vermag nicht ohne weiteres diese Filter zu passieren. Wir haben jedoch gefunden, daß entweder unser Verfahren des Erhitzens oder unser Verfahren der Filtration HA oder NaH erzeugen, die bzw. das leicht durch ein 0,22 $\mu$m-Filter hindurchgeht,

6

was die Sterilisierung der fertigen Endprodukt-Formulierung ermöglicht. Theoretische Überlegungen gehen dahin, daß beide der von uns aufgefundenen Verfahren der Viskositätserniedrigung die Molekül-Konformation in ähnlicher Weise ändern, wie sie bei der pH-Erhöhung gesehen wird. Die ursprünglich starre α-Helix-Struktur von NaH oder HA hoher Viskosität wird mit dem Zerbrechen der Zwischenrest-Bindungen durch Wärme oder Filtration entspannt. Bei unseren beiden Verfahren ist jedoch die Viskositätsverringerung nicht dadurch reversibel, daß einfach die Temperatur oder der pH abgesenkt werden, wie dies bei der durch pH-Änderungen bewirkten Viskositätsänderung beobachtet wird.

Die beiden hierin beschriebenen Verfahren ermöglichen die Herstellung hochmolekularer niedrigviskoser HA, die am Ende filtersterilisierbar ist. Das bevorzugte Herstellungsverfahren ist in Beispiel 1 umrissen.

Die Erfindung wird durch folgenden Beispiele näher erläutert, die jedoch nicht als einschränkend zu verstehend sind; in den Beispielen beziehen sich sämtliche Teile und Prozentzahlen auf das Gewicht, sofern nichts Anderes angegeben ist.

## Beispiele

### Beispiel 1

1. Man verwendet eine HA (als solche oder als Salz, vorzugsweise des Kalium oder Natrium) in einer Konzentration von annähernd 0,5 % oder höher enthaltende Lösung. HA stammt aus einer Bakterien-Fermentationsquelle, oder einer anderen Quelle (d. h. aus Hahnenkämmen, Nabelschnüren etc.). HA aus bakterieller Quelle wird bevorzugt.

2. Man baut einen Wickler-Apparat so auf, daß die HA-Lösung in 95-proz. Ethanol in einem Behälter eingespeist werden kann, während der Wickler das Ethanol mischt.

3. Man gibt HA zu dem Ethanol, während der Wickler das Ethanol mit langsamer bis mäßiger Geschwindigkeit mischt.

4. Man setzt das Wickeln nach Zugabe der letzten HA-Lösung noch ungefähr 30 min fort.

5. Man läßt das Ethanol aus dem Behälter ab, nachdem die ausgefällte HA sich um den Wickler-Käfig gewickelt hat.

6. Man füllt den Behälter mit Wasser zur Injektion. Man stellt den Wickler an und läßt, ihn mit langsamer Geschwindigkeit weiter laufen, bis die HA sich vollständig gelöst hat.

7. Man wiederholt die Schritte 2 bis 6, bis die gewünschte Reinheit, das gewünschte Molekulargewicht oder die gewünschte Viskosität erreicht sind.

8. Zur Erniedrigung der Viskosität und Aufrechterhaltung des hohen Molekulargewichts und des engen Molekulargewicht-Bereichs wird die Wärmebehandlung durchgeführt.

   a. Man überführt die gereinigte HA-oder NaH-Lösung mit etwa 1,2 % HA in einen ummantelten Behälter mit einem Mischer, der zum Rühren einer hochviskosen Lösung befähigt ist.

   b. Man regelt vorzugsweise die Wärme auf einen Wert zwischen 55 °C und 65 °C.

   c. Soweit Verdampfung stattfindet, wird Wasser zur Injektion (WFI) nachgefüllt, um das ursprüngliche Volumen aufrechtzuerhalten.

   d. Die Viskosität wird überwacht, bis sie den vorher festgelegten Wert, vorzugsweise unter 150 cSt, erreicht oder unterschreitet.

9. Nach der Wärmebehandlung ist das HA-Material von niedriger Viskosität, hohem Molekulargewicht, einem engen Molekulargewichts-Bereich und weist ultrahohe Reinheit auf. Das Material ist auch beständig gegen Licht und Wärme.

10. Zur Herstellung des Endproduktes wird das in 9. beschriebene HA-Material sterilisiert. Dies erfolgt vorzugsweise mittels Sterilfiltration durch ein Filter von 0,22μm. Hitzesterilisation kann ebenfalls angewandt werden.

Das Produkt, das nach der Arbeitsweise dieses Beispiels erhalten worden war, wurde wiederholt nach der Langzeit-Einwirkung von Licht bei Raumtemperatur (mehrere Monate) und nach Langzeit-Einwirkung von Temperaturen von wenigstens 50 °C (12 Monate) getestet. Das Molekulargewicht und % Al waren nach diesen Behandlungen unverändert.

Es wurde außerdem sowohl durch analytische Tests als auch durch in vivo-Untersuchung gefunden, daß das Produkt Antigen-frei ist. Hyperimmunisierung sowohl von Pferden als auch von Kaninchen entwickelte keinerlei mittels der Western Transblot Elektrophorese-Technik nachweisbare Antikörper. Drei intramuskuläre Injektionen einer wäßrigen gepufferten Lösung von 1 Gew.-% wurden in Intervallen von 7 Tagen vorgenommen, wobei Injektionen von 0,5 ml für das Kaninchen und von 2,0 ml für das Pferd gegeben wurden. Der dem Arthus-Phänomen gleichartige Hautreaktionstest (Arthus Phenomenon Like Skin Reaction Test), der die Hyperimmunisierung eines Kaninchens, die nachfolgende Injektion eines makrophagen-empfindlichen Farbstoffs in eine Ohrvene und die anschließende intraperitoneale Injektion dieser HA umfaßt, gab ebenfalls eine negative Indikation, d.h. keine Immunreaktion. Die Injektion von 2 ml einer gepufferten wäßrigen Lösung von 1 Gew.-% des Natrium-Salzes entweder in das Tibiotarsal-oder das Radialcarpal-Gelenk eines Pferdes rief keine Immunreaktion hervor, wie sie aufgrund des Anschwellens nach der Injektion (verglichen mit derjenigen durch die Injektion des gepufferten Lösungsmittels allein) beurteilt wurde.

Zur Veranschaulichung der Ergebnisse der beschriebenen Arbeitsweisen wurde ein vierter HA-ANsatz im technischen Maßstab während des gesamten Verfahrens auf Molekulargewicht und Viskosität untersucht. Die Messwerte sind in Tabelle 5 aufgeführt. Es ist anzumerken, daß alle Proben zwischen 9,0 und 10,0 mg/ml HA gelöst in WFI enthielten. Molekulargewicht und Viskosität nehmen als Folge des Wickelns zu, jedoch die Viskosität allein nimmt bei der Wärmebehandlung ab. Aufgrunddessen hat das resultierende Produkt ein hohes Molekulargewicht und eine niedrige Viskosität.

Wenn ein hochmolekulares, hochviskoses Produkt erwünscht ist, kann der Schritt der Wärmebehandlung unterbleiben. Eine $\beta$-Propiolacton-oder gamma-Strahlen-Sterilisation kann durchgeführt werden.

Unter Einsatz des bevorzugten Verfahrens kann ein Produkt mit den in Tabelle 6 angegebenen Spezifikationen erzeugt werden. Diese Tabelle vergleicht das beanspruchte Produkt mit den im Handel erhältlichen Produkten von Pharmacia und Sterivet. Dies bestätigt die Einzigartigkeit seiner Produkt-Kennwerte.

8

## Tabelle 1

### Effekt der Wärme auf die Viskosität von NaH, wobei kein Effekt auf das Molekulargewicht eintritt

| HA Ansatz | Viskosität vor dem Erwärmen (cSt) | $M_w$ vor dem Erwärmen | Viskosität nach dem Erwärmen (cSt) | Tage der Wärme-Behandlung | $M_w$ nach dem Erwärmen |
|---|---|---|---|---|---|
| 1 | 4475 | $2,0 \times 10^6$ | 134 | 9 | $1,8 \times 10^6$ |
| 2 | 924 | $1,7 \times 10^6$ | 68 | 7 | $1,8 \times 10^6$ |
| 3 | 1382 | $1,9 \times 10^6$ | 185 | 20[*] | $1,8 \times 10^6$ |

[*] Die Anfangsbehandlung fand in einem geschlossenen Gefäß statt.

## Tabelle 2

### Effekt der Langzeit-Behandlung mit wenig Wärme auf die Viskosität einer NaH-Lösung

| Proben-behandlung | Viskosität cSt[**] | Molekular-gewicht |
|---|---|---|
| keine | 318 | $1,1 \times 10^6$ |
| 30 °C, 1 Monat | 298 | $1,2 \times 10^6$ |
| 40 °C, 1 Monat | 248 | $1,1 \times 10^6$ |
| 50 °C, 1 Monat | 175 | $1,1 \times 10^6$ |

[**] Material wurde nicht dem Wickelverfahren unterzogen.

## Tabelle 3
### Effekt hoher Temperatur
### auf die Viskosität einer NaH-Lösung

| Proben-behandlung | Viskosität cSt | Molekular-gewicht |
|---|---|---|
| keine | 4475 | $1,7 \times 10^6$ |
| 121 °C, 30 min | 454 | $1,8 \times 10^6$ |
| 121 °C, 60 min | 96 | $1,8 \times 10^6$ |

## Tabelle 4[*]
### Effekt der Filtration
### auf die Viskosität

| Proben-behandlung | Viskosität cSt | Molekular-gewicht |
|---|---|---|
| keine | 1226 | $1,1 \times 10^6$ |
| Vakuum-Filtration (Filter 1,0 $\mu$m) | 998 | $1,1 \times 10^6$ |
| Vakuum-Filtration (Filter 0,45 $\mu$m) | 542 | $1,1 \times 10^6$ |
| Vakuum-Filtration (Filter 0,22 $\mu$m) | 279 | $1,1 \times 10^6$ |

[*] Das Material wurde einem "Wickel"-Verfahren unterzogen, das die Beziehung Molekulargewicht/Viskosität gegenüber der typischerweise bei Hyaluronsäure beobachteten ändert.

## Tabelle 5

### Validität von Molekulargewicht und Viskosität
### von Ansatz 4 im Laufe von drei Wickelschritten
### und einer Wärmebehandlung

| Schritt des Verfahrens | Molekulargewicht $(\times 10^6$ u $(\times 10^6$ Dalton$))$ | Viskosität[*] cSt |
|---|---|---|
| nach dem 1. Wickeln | 1,2 | 65 |
| nach dem 2. Wickeln | 1,9 | 170 |
| nach dem 3. Wickeln | 2,0 | 1126 |
| Endprodukt nach der Wärmebehandlung | 2,0 | 90 |

[*] Die Viskositäten nach den Wickel-Vorgängen, jedoch nicht nach der Wärmebehandlung, waren diejenigen wäßriger Lösungen mit 0,5 Gew.-% bei 37 ·C.

## Tabelle 6

### Vergleich des erfindungsgemäßen Produkts (BAYVET)
### mit Handelsprodukten von PHARMACIA und STERIVET

| Geprüfter Parameter | BAYVET-Produkt | PHARMACIA | STERIVET |
|---|---|---|---|
| % AI | 0,9-1,1 | 0,99 | 0,93 |
| mittleres Mol.-Gew. $(\times 10^6$ u $(\times 10^6$ Dalton$))$ | >1,8 | 1,9 | 1,1 |
| Mol.-Gew.-Bereich $(\times 10^6$ u $(\times 10^6$ Dalton$))$ | 1,8-3,5 | | |
| Viskosität (cSt) | <150 | >1000 | 15 |
| Aminosäuren (mg/ml) | <0,1 | 0,38 | 0,47 |
| Nucleinsäuren ($\mu$g/ml) | <5,0 | 53,8 | 6,0 |
| Lichtbeständigkeit | ja | nein | ? |
| Wärmebeständigkeit | ja | nein | ? |
| Filtersterilisiert | ja | nein | nein |

## 0 228 698

**Ansprüche**

1. Im wesentlichen reine, licht-und wärmebeständige Hyaluronsäure oder ein Salz derselben mit einem mittleren Molekulargewicht von wenigstens etwa 1 200 000 u (Dalton) mittels FPLC, einer irreversiblen Viskosität von weniger als etwa 500 cSt in einer wäßrigen Lösung mit 1 Gew.-% des Natrium-Salzes bei 37 °C und der Fähigkeit, sich ohne weiteres durch ein Filter von 0,22 $\mu$m filtersterilisieren zu lassen.

2. Licht-und wärmebeständige Hyaluronsäure oder ein Salz derselben mit den folgenden Kennzeichen:

a) Einem mittleren Molekulargewicht, bestimmt mittels FPLC, von wenigstens $1,2 \times 10^6$ u (Dalton);

b) einer Molekulargewichts-Verteilung, die einen einzelnen, im wesentlichen symmetrischen FPLC-Verteilungs-Peak liefert, wobei wenigstens 98 % des Materials ein Gewicht zwischen etwa $1,2 \times 10^6$ und $4,0 \times 10^6$ haben;

c) einer Viskosität einer wäßrigen Lösung mit 1 Gew.-% des Natrium-Salzes bei 37 °C von weniger als etwa 500 cSt;

d) der Fähigkeit, durch ein Filter von 0,22 $\mu$m Porengröße leicht filtersterilisierbar zu sein;

e) einem Proteingehalt von weniger als etwa 1,25 mg/ml und einem Nucleinsäure-Gehalt von weniger als 0,45 $\mu$g/ml mittels UV-Extinktion;

f) dem Ausbleiben einer nennenswerten Immunreaktion, wenn 2 ml einer wäßrigen Lösung von 1 Gew.-% des Natrium-Salzes entweder in das Tibiotarsal-oder das Radialcarpal-Gelenk eines Pferdes injiziert werden, beurteilt aufgrund des Anschwellens nach der Injektion.

3. Verfahren zur Herstellung einer Hyaluronsäure oder ein Salz derselben enthaltenden Zusammensetzung, umfassend die Schritte

a) des Gewinnens von Hyaluronsäure (HA) oder eines Salzes derselben aus einer Quelle wie durch Fermentierung, aus Hahnenkämmen oder Nabelschnüren;

b) des Ausfällens der HA unter Verwendung eines speziellen Wicklers zur Erhöhung des Molekulargewichts auf wenigstens etwa 1 800 000;

c) des Erhitzens des Produkts aus Schritt b) unter Bedingungen, die ausreichend sind, ohne nennenswerte Erniedrigung des Molekulargewichts die Viskosität kauf weniger als etwa 500 cSt zu verringern.

4. Verfahren nach Anspruch 3, dadurch gekennzeichnet, daß das Produkt auf wenigstens 50 °C erhitzt wird.

5. Verfahren nach Anspruch 3, dadurch gekennzeichnet, daß in Schritt b) das Molekulargewicht auf wenigstens etwa 2 500 000 erhöht wird, das Erhitzen auf wenigstens 50 °C wenigstens 72 h dauert und unter Bedingungen durchgeführt wird, die zur Erniedrigung der Viskosität auf weniger als etwa 150 cSt ausreichen.

6. Verfahren zur Herstellung einer Hyaluronsäure oder ein Salz derselben enthaltenden Zusammensetzung, umfassend die Schritte

a) des Gewinnens von Hyaluronsäure (HA) oder eines Salzes derselben durch Fermentierung oder aus einer anderen Quelle;

b) des Ausfällens des HA-Produkts aus Schritt a) unter Verwendung eines speziellen Wicklers zur Erhöhung des Molekulargewichts auf wenigstens etwa 1 800 000;

c) des Filtrierens des Produkts aus Schritt b) durch ein Filter mit einer mittleren Porengröße von etwa 1 $\mu$m oder weniger unter Bedingungen, die ausreichen, um eine Erniedrigung der Viskosität auf weniger als etwa 500 cSt sicherzustellen.

7. Verfahren nach Anspruch 6, dadurch gekennzeichnet, daß das Filter in Schritt b) eine mittlere Porengröße von weniger als etwa 0,5 $\mu$m besitzt.

8. Verfahren zur Verengung der Molekulargewichts-Verteilung und zur Vergrößerung des Molekulargewichts von Hyaluronsäure oder einem Salz derselben, umfassend das Ausfällen derselben in einem Bad eines Nichtlösungsmittels, das eine sich kontinuierlich bewegende Vorrichtung enthält, an der das ausfallende Material haften kann.

9. Verfahren nach Anspruch 8, dadurch gekennzeichnet, daß das gefällte Material wiederaufgelöst und zur Erniedrigung seiner viskosität auf weniger als etwa 500 cSt, gemessen an einer wäßrigen Lösung mit 1 Gew.-% des Natriumsalzes bei Raumtemperatur, behandelt wird.

10. Verfahren zur Erniedrigung der Viskosität einer hochmolekularen Hyaluronsäure oder eines Salzes derselben, umfassend das Erhitzen einer Lösung eines solchen Materials mit einem Molekulargewicht bestimmt mittels FPLC, von wenigstens etwa $1,1 \times 10^6$ u (Dalton) und einer Viskosität einer wäßrigen Lösung mit 1 Gew.-% des Natrium-Salzes bei 37 °C oberhalb von 500 cSt während einer Zeitspanne und auf eine Temperatur, die ausreichen, um die Viskosität zu erniedrigen, ohne daß dadurch das Molekulargewicht nennenswert beeinflußt wird.

13